# EUROPEAN PATENT SPECIFICATION

(11) **EP 3 898 496 B1**
(45) Date of publication and mention of the grant of the patent: **26.10.2022**
(21) Application number: 19808668.8
(22) Date of filing: 20.11.2019
(51) Int. Cl.: B67C 3/28, F16K 31/08, F16K 31/04

(54) **A FILLING DEVICE FOR FILLING A RECEPTACLE AND A FILLING MACHINE**
FÜLLVORRICHTUNG ZUM FÜLLEN EINES BEHÄLTERS UND FÜLLMASCHINE
DISPOSITIF DE REMPLISSAGE POUR REMPLIR UN RÉCIPIENT ET MACHINE DE REMPLISSAGE

(30) Priority: 21.12.2018 IT 201800020848
(43) Date of publication of application: 27.10.2021
(73) Proprietor: Gea Procomac S.p.A., 43038 Sala Baganza (PR) (IT)
(72) Inventor: BONFANTI, Michele, 43038 Sala Baganza (Parma) (IT); ANTIGA, Simone, 43038 Sala Baganza (Parma) (IT); ABELLI, Paolo, 43038 Sala Baganza (Parma) (IT)
(74) Representative: Dondi, Silvia
(86) International application number: PCT/IB2019/059973
(87) International publication number: WO 2020/128677

(56) References cited:
- EP-A1- 1 433 738
- EP-A2- 1 277 694
- WO-A1-2016/171560
- FR-A1- 2 983 843
- JP-A- H07 187 292
- JP-A- 2011 116 425
- JP-A- 2016 216 103
- US-A1- 2006 261 300
- US-B1- 6 375 050

## Description

### Technical field

The present invention relates to a filling device for filling a receptacle and a filling machine.

The invention finds application in the packaging of a fluid food product (beverage), optionally containing solid pieces.

One of the reference sectors is the bottling of so-called "sensitive" food products, i.e. products that are particularly sensitive to bacteriological contamination and oxidation, such as, for example, isotonic drinks, juices, nectars, soft drinks, tea, milk-based drinks, coffee-based drinks, soups, broths, etc., for which the prevention of possible microbiological contamination throughout all packaging stages is of fundamental importance.

In this context, the solid pieces are for example pieces of fruit or vegetables, grains, pulses, nuts, etc.

### Background art

Beyond the various existing solutions, a filling machine comprises a plurality of container filling stations, in which a dosing device is present with a shutter which puts the product tank in selective communication with the dispensing nozzle.

Each dosing device is generally associated with a flow rate regulator so as to pass from higher flow rates - in the initial step of filling the receptacle - to lower flow rates, when the filling is nearing completion. The regulation of the flow rate is carried out by detecting the fluid level or the weight reached by the fluid in the receptacle - this detection can take place with a known type of sensor, which transmits an appropriate signal for opening/closing the shutter.

The dosing device thus assumes at least three configurations:
- a total closure configuration in which there is no product being dispensed;
- a maximum open configuration, in which the product is dispensed at a high flow rate;
- a partially open configuration, in which the product is dispensed at a reduced flow rate.

Document EP 2768764 describes a flow rate selector for a filling machine. The flow rate selector comprises an elongated shutter slidable inside a valve body that can assume two limit configurations inside the valve body, i.e., a total closure configuration and a maximum open configuration. The shutter is crossed by a channel which extends throughout its length and has some radial fins that radiate from the body or main stem. Sliding in the valve body, the shutter can assume a configuration in which the opening of the channel is reduced, which determines a regulation of the flow rate. The movement means of the shutter is external to the valve body and comprises:
- a piston slidable inside a cavity thereof;
- a tubular body, integrally fixed to the piston and coaxially mounted outside the valve body.

The tubular body houses at least one permanent magnet magnetically coupled to one ferromagnetic layer constituting the shutter.

The magnetic coupling of the shutter and tubular body is not, however, optimal from the point of view of magnetic flow lines. This can cause a delay in the transition from the high flow rate to the low flow rate of the valve, as well as poor accuracy and reliability.

A filling device in accordance with the preamble of claim 1 is known from document US 2006/261300, in which an actuator is present formed by different magnets separated by ferromagnetic portions.

### Disclosure of the invention

In this context, the technical task at the basis of the present invention is to propose a filling device for filling a receptacle and a filling machine which overcome the problems of the prior art cited above.

In particular, an object of the present invention is to propose a filling device for filling a receptacle whose implementation is more reliable, precise and rapid compared to the known solutions.

Another object of the present invention is to propose a filling device for filling a receptacle in which the flow rate of dispensed fluid can be regulated in a simple, accurate and reliable manner.

Another object of the present invention is to propose a filling device for filling a receptacle capable of dispensing a fluid containing solid pieces without increasing the structural complexity thereof.

The stated technical task and specified objects are substantially achieved by a filling device for filling a receptacle according to clam 1.

Preferably, the coating is made of PEEK.

The core of the slider has a central portion having a cylindrical extension along said longitudinal direction and a plurality of radial projections having an extension orthogonal to the longitudinal direction. Preferably, between the radial projections there are spaces or gaps filled by the coating.

Each ferromagnetic ring faces a group of radial projections located at the same height as the slider, a wall of the valve body being interposed between the ferromagnetic ring and the radial projections of the group.

In accordance with one embodiment, the radial projections are distributed along the longitudinal extension of the central portion.

Preferably, the radial projections are equally spaced.

In accordance with the invention, each radial projection consists of a fin or tooth extending radially from the central portion.

Preferably, the fins or teeth that extend at the same height as the slider define a cross-shaped structure.

Preferably, the magnetic rings and the ferromagnetic rings are packed into a box-shaped container made of non-ferromagnetic material.

Preferably, the core of the slider is concentric and coaxial to the valve body.

Preferably, the annular sleeve is coaxial to the valve body.

In accordance with one embodiment, the filling device comprises a stepper motor configured to make the annular sleeve slide on the valve body.

In accordance with one embodiment, the passage has a section narrowing that defines a first chamber receiving a filling fluid from the inlet and a second chamber receiving the filling fluid from the first chamber.

The valve means also comprises a shutter and a flow rate selector.

The shutter is integrally fixed to a first end of the slider in proximity to the dispensing nozzle.

The flow rate selector is integrally fixed to a second end of the slider and is configured to assume at least one engagement configuration with the section narrowing.

When the flow rate selector is in the engagement configuration with the section narrowing it defines with said section narrowing at least one minimum gap that places in fluid communication the first chamber and the second chamber.

In accordance with one embodiment, the section narrowing is defined by a thickening located transversally to the walls of the valve body. The minimum gap is obtained by affording a groove in said thickening. Alternatively, the minimum gap is obtained by affording a grooved recess on the outer surface of the flow rate selector.

By effect of the sliding of the slider in the valve body, the flow rate selector can assume at least three configurations:
- a first engagement configuration wherein the flow rate selector engages the section narrowing defining said minimum gap;
- a second engagement configuration wherein the flow rate selector engages the section narrowing defining a gap larger than said minimum gap;
- a third configuration wherein the flow rate selector does not engage the section narrowing and is arranged in said first chamber.

In particular:
- in the first engagement configuration the flow rate selector is arranged between the first chamber and the second camber;
- in the second engagement configuration the flow rate selector is arranged mainly in the first chamber;
- in the third configuration the flow rate selector is arranged entirely in the first chamber;

In accordance with one embodiment, the flow rate selector can assume infinite positions between the first and the second engagement configuration.

In accordance with an alternative embodiment, the flow rate selector can assume a discrete number of positions between the first and the second engagement configuration.

Preferably, the flow rate selector comprises a body having an elongated shape with a first ogival end which is tapered in the direction of the first chamber and a second ogival end which is tapered in the direction of the second chamber.

In accordance with one embodiment, the flow rate selector has a grooved recess in the zone of the second ogival end.

Preferably, the shutter also has an ogival conformation.

### Brief description of drawings

Further characteristics and advantages of the present invention will more fully emerge from the non-limiting description of a preferred but not exclusive embodiment of a filling device for filling a receptacle and a filling machine, as illustrated in the accompanying drawings, in which:
- figures 1, 2 and 3 illustrate a filling device for filling a receptacle, in as many configurations, in longitudinal section, in accordance with the present invention;
- figure 4 illustrates an element (slider) of the filling device of figures 1-3, in cross section;
- figure 5 illustrates a detail of the engagement between the flow rate selector and the section narrowing of the filling device of figure 1, in accordance with an alternative embodiment.

### Detailed description of preferred embodiments of the invention

With reference to the figures, number 1 indicates a filling device for filling a receptacle, of glass or plastic (ex. PET) or of another material.

The filling device 1 comprises a valve body 2 that mainly extends along a longitudinal direction AA, in which a passage 3 for a filling fluid is obtained. This passage 3 is obtained between an inlet 4 of the fluid and a dispensing nozzle 5 for dispensing the filling fluid to the receptacle.

Valve means 6 is operatively active on the passage 3, configured to establish a selective communication between the inlet 4 and the dispensing nozzle 5.

In the embodiment described and illustrated herein, the valve means 6 comprises:
- a slider 7, having an elongated shape and extending parallel to the longitudinal direction AA, which is slidably inserted into the valve body 2, in particular in the passage 3 between the inlet 4 and the dispensing nozzle 5;
- a shutter 8 integrally fixed to a first end 7a of the slider 7 in proximity to the dispensing nozzle 5;
- a flow rate selector 9 integrally fixed to a second end 7b of the slider 7, opposite the first end 7a.

In the embodiment described and illustrated herein, the shutter 8 and the flow rate selector 9 are screwed to the slider 7.

Preferably, the shutter 8 has an ogival conformation and can assume a closed configuration of the dispensing nozzle 5, wherein the dispensing of the fluid is prevented, and an open configuration of the dispensing nozzle 5, wherein the fluid is dispensed with a flow rate depending on the position of the flow rate selector 9 within the passage 3.

The passage 3 has a section narrowing 10 which defines:
- a first chamber 11 receiving the filling fluid from the inlet 4;
- a second chamber 12 receiving the filling fluid from the first chamber 11.

With reference to the figures, the first chamber 11 is located above the section narrowing 10 and the second chamber 12 is located below this section narrowing 10.

The section narrowing 10 is defined by a thickening 110 located transversally to the walls of the valve body 2. For example, this localised thickening defines a cusp-like shape.

The flow rate selector 9 is configured to assume at least one engagement configuration with the section narrowing 10 in which it defines with the latter at least one minimum gap 110a, 9d that places in fluid communication the first chamber 11 and the second chamber 12.

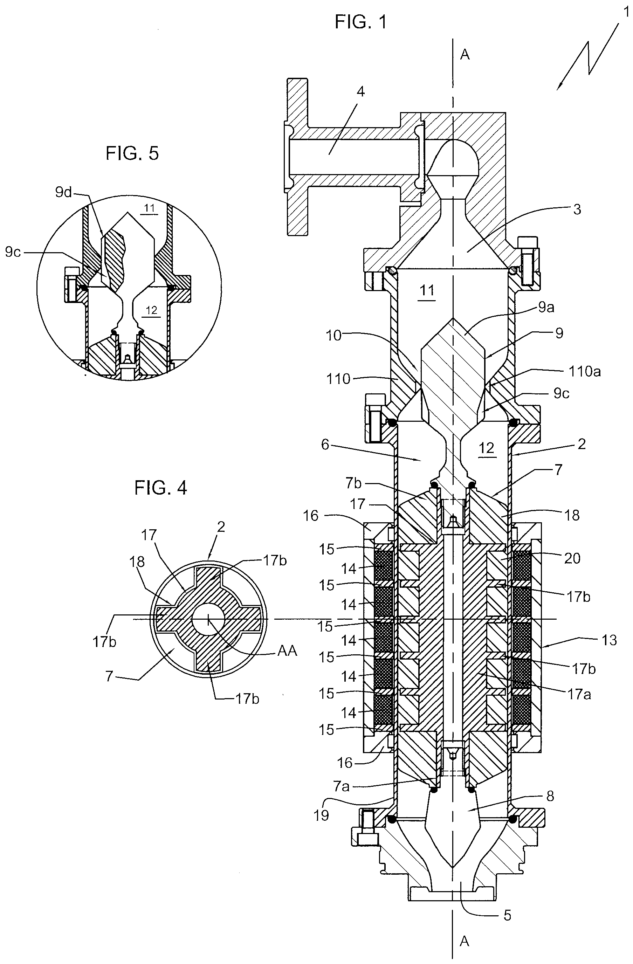

In accordance with a first embodiment, illustrated in figure 1, the minimum gap 110a is obtained by affording a groove in the thickening 110 of the walls of the valve body 2. Preferably, multiple grooves are afforded in this thickening 110, for example four.

In an alternative embodiment, illustrated in figure 5, the minimum gap 9d is obtained by affording a grooved recess on the outer surface of the flow rate selector 9. This grooved recess follows the longitudinal extension of the flow rate selector 9.

Preferably, in fact, the flow rate selector 9 comprises a body having an elongated shape with a first ogival end 9a which is tapered in the direction of the first chamber 11 and a second ogival end 9b which is tapered in the direction of the second chamber 12.

To increase the passage gap (i.e. to make the minimum gap greater), the flow rate selector 9 can also have a grooved recess 9c in the zone of the second ogival end 9b.

In an alternative embodiment, the second ogival end 9b has a greater taper than that of the first ogival end 9a.

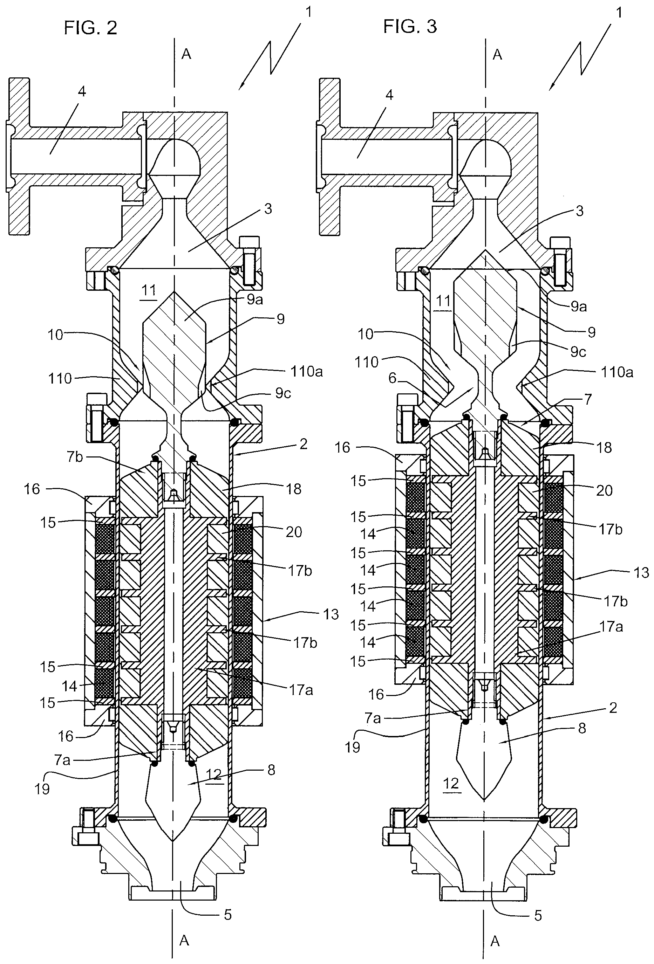

By effect of the sliding of the slider 7 in the valve body 2, the flow rate selector 9 can assume at least three configurations:
- a first engagement configuration wherein the flow rate selector 9 engages the section narrowing 10 defining the minimum gap 110a, 9d (see figure 1 or figure 5).
- a second engagement configuration wherein the flow rate selector 9 engages the section narrowing 10 defining a gap larger than the minimum gap (see figure 2);
- a third configuration wherein the flow rate selector 9 does not engage the section narrowing 10 and is arranged in the first chamber 11 (see figure 3).

In particular:
- in the first engagement configuration the flow rate selector 9 is arranged between the first chamber 11 and the second chamber 12, preferably in the middle (see figure 1 or figure 5);
- in the second engagement configuration the flow rate selector 9 is arranged mainly in the first chamber 11 (see figure 2);
- in the third configuration the flow rate selector 9 is arranged entirely in the first chamber 11 (see figure 3).

In all three configurations, the flow rate selector 9 is arranged with the first ogival end 9a in the first chamber 11.

In the first and in the second configuration the flow rate selector 9 is arranged with the second ogival end 9b at least partially in the second chamber 12, while in the third configuration, the second ogival end 9b is located in the first chamber 11.

In particular, in the second configuration, the second ogival end 9b is located partially in the second chamber 12.

Instead in the first configuration, the second ogival end 9b is located entirely in the second chamber 12.

The filling device 1 comprises an annular sleeve 13 slidably mounted outside the valve body 2.

In particular, the annular sleeve 13 is coaxial to the valve body 2.

Its sliding on the valve body 2 is obtained by means of a stepper motor (not shown).

Advantageously, the annular sleeve 13 comprises a plurality of magnetic rings 14 (i.e. formed by permanent magnets) alternating with a plurality of ferromagnetic rings 15.

In particular, the magnetic rings 14 and the ferromagnetic rings 15 are packed into a box-shaped container 16 made of non-ferromagnetic material.

The slider 7 is magnetically coupled to the annular sleeve 13 thanks to the fact that it comprises a core 17 made of ferromagnetic material to which a coating 18 made of thermoplastic polymer is applied.

For example, the coating 18 is made of PEEK.

In particular, the core 17 is concentric and coaxial to the valve body 2. Preferably, the core 17 has a central portion 17a having a cylindrical extension along the longitudinal direction AA and a plurality of radial projections 17b having an extension orthogonal to the longitudinal direction AA.

In particular, the radial projections 17b are distributed along the longitudinal extension of the central portion 17a, i.e. are distributed along the length of the central portion 17a.

Preferably, the radial projections 17b are equally spaced.

In this context, it should be understood that the radial projections 17b are equally spaced both angularly, relative to an axis of symmetry of the central portion 17a (which can coincide with the previously introduced longitudinal direction AA), and longitudinally, i.e. in their extension along the length of the central portion 17a.

For example, each radial projection 17b consists of a fin or tooth extending radially from the central portion 17a.

In the embodiment described and illustrated herein, the fins or teeth that extend at the same elevation (or height) of the slider 7 define a cross-shaped structure, as shown in figure 4.

The spaces or gaps 20 between the radial projections 17b are filled by the coating 18 of thermoplastic polymer.

Advantageously, each ferromagnetic ring 15 of the annular sleeve 13 faces a group of radial projections 17b located at the same elevation (or height) of the slider 7.

The thickness of the radial projections 17b is substantially identical to the thickness of the ferromagnetic rings 15.

Each magnetic ring 14 faces the spaces or gaps 20 filled by the coating 18.

The thickness of the spaces or gaps 20 is substantially identical to the thickness of the magnetic rings 14.

The alignment of each ferromagnetic ring 15 with a group of radial projections 17b allows maximising the passage of the lines of force of the magnetic field.

A wall 19 of the valve body 2 made of non-ferromagnetic material is interposed between the annular sleeve 13 and the slider 7.

In an alternative embodiment, the valve means 6 could also be of another type than that described thus far and illustrated herein.

In particular, the valve means 6 could consist of a slider 7 crossed by a coaxial duct that serves the function of reducing the flow rate, as in document EP 2768764.

In accordance with one embodiment, the magnetic coupling between the slider 7 and the annular sleeve 13 allows moving the slider 7 such that the flow rate selector 9 can assume infinite positions between the first and the second engagement configuration. In other words, the slider 7 is moved in a continuous and gradual manner, i.e. not discrete.

In accordance with another embodiment, the flow rate selector 9 can assume a discrete number of positions between the first and the second engagement configuration.

The filling machine (not illustrated) proposed herein comprises a plurality of filling stations, in each of which a filling device in accordance with the present invention is located.

Preferably, the filling machine is of the rotating carousel type. Alternatively, the filling machine is of the linear type.

The operation of the filling device for filling a receptacle, according to the present invention, is described below.

Once it reaches the filling station, the receptacle is located below the corresponding filling device 1. As a function of the specific application, the inlet of the receptacle can be in contact with the dispensing nozzle 5, or it can be spaced from the latter.

The shutter 8 is located in the open configuration, thus the dispensing of the fluid in the underlying receptacle is enabled.

During a first step of filling, so-called "high flow rate", the flow rate selector 9 is located in the second engagement configuration, illustrated in figure 2. In particular, the flow rate selector 9 engages the section narrowing 10 and is mainly maintained in the first chamber 11. The fluid laps the walls of the flow rate selector 9 that delimit the grooved recess 9c on the second ogival end 9 and, due to gravity, reaches the dispensing nozzle 5 from which it is dispensed to the underlying receptacle.

Upon reaching a predetermined threshold value (level or weight) of fluid dispensed into the receptacle, detected by a sensor (not shown), the stepper motor slides the annular sleeve 13 downwards, i.e. in the direction of the dispensing nozzle 5. Thanks to the magnetic coupling, the slider 7 in turn moves in this direction in such a manner that the flow rate selector 9 passes from the second to the first engagement configuration, illustrated in figure 1. In particular, the flow rate selector 9 is positioned in the section narrowing 10 substantially in the middle between the first chamber 11 and the second chamber 12. Thus a second filling step begins, so-called "low flow rate", which allows completing the filling of the receptacle by reducing the turbulence of the fluid.

In fact, the grooved recess 9c of the second ogival end 9b of the flow rate selector 9 in this way is located below the section narrowing 10, while the minimum gap is defined by the groove 110a afforded in the thickening 110. The flow rate is thereby reduced.

Similarly, the variant of figure 5 provides for reducing the flow rate by realising the minimum gap via the longitudinal grooved recess 9d afforded in the flow rate selector 9.

Where a fluid with solid pieces must be dispensed, the stepper motor slides the annular sleeve 13 upwards, i.e. in the direction of the section narrowing 10. Thanks to the magnetic coupling, the slider 7 in turn moves in this direction in such a manner that the flow rate selector 9 assumes the third configuration, illustrated in figure 3. In particular, the flow rate selector 9 is positioned entirely in the first chamber 11 so as to not engage the section narrowing 10.

This allows the passage of solid pieces through the section narrowing 10. The characteristics of the filling device for filling a receptacle and the filling machine, according to the present invention, are clear, so are the advantages.

In particular, the packed structure of the annular sleeve, formed by magnetic and ferromagnetic rings, coupled to the slider with a ferromagnetic core makes the magnetic coupling reliable and precise.

In particular, the facing of the ferromagnetic rings to the radial projections of the slider allows optimising the magnetic coupling relative to the known solutions because it keeps the flow lines of the magnetic field concentrated in the ferromagnetic materials, counteracting the dispersion in the air or in the polymeric material of the coating.

The finned structure of the core of the slider, for example cross-shaped, also allows:
- dispensing a fluid containing solid pieces;
- sliding the cursor along the inner walls of the valve body.

The regulation of the flow rate is obtained thanks to the double ogival conformation of the flow rate selector, cooperating with a section narrowing inside the valve body so as to vary its position relative to this section narrowing.

In addition, the regulation of the flow rate can take place in a gradual and calibrated manner according to the type of application, using a single mobile element with a very simple structure (double ogival flow rate selector).

## Claims

1. A filling device (1) for filling a receptacle, comprising:
a valve body (2) which mainly extends along a longitudinal direction (AA);
an inlet (4) for a filling fluid;
a dispensing nozzle (5) for dispensing the filling fluid to the receptacle;
a passage (3) for the filling fluid, obtained inside the valve body (2) between the inlet (4) and the dispensing nozzle (5);
valve means (6) operatively active on said passage (3) to establish a selective communication between the inlet (4) and the dispensing nozzle (5), said valve means (6) comprising a slider (7) slidably inserted in the valve body (2), said slider (7) comprising a core (17) made of ferromagnetic material to which a coating (18) is applied, the core (17) of said slider (7) having a central portion (17a) having a cylindrical extension along said longitudinal direction (AA) and a plurality of radial projections (17b) having an extension orthogonal to the longitudinal direction (AA);
an annular sleeve (13) slidably mounted outside the valve body (2), said annular sleeve (13) comprising a plurality of magnetic rings (14) alternating with a plurality of ferromagnetic rings (15),
wherein a wall (19) of the valve body (2) is interposed between said ferromagnetic ring (15) and the radial projections (17b),
**characterised in that**
the coating is made of thermoplastic polymer, and **in that** each ferromagnetic ring (15) faces a group of radial projections (17b) located at the same height relative to the slider (7), wherein each of said radial projections (17b) consists of a fin or tooth extending radially from said central portion (17a).

2. The filling device (1) according to claim 1, wherein between said radial projections (17b) there are spaces or gaps (20) filled by said coating (18).

3. The filling device (1) according to claim 1 or 2, wherein said radial projections (17b) are distributed along the longitudinal extension of said central portion (17a).

4. The filling device (1) according to any one of claims 1 to 3, wherein said radial projections (17b) are equally spaced.

5. The filling device (1) according to claim 1, wherein the fins or teeth that extend at the same height relative to the slider (7) define a cross-shaped structure.

6. The filling device (1) according to any one of claims 1 to 5, wherein said magnetic rings (14) and said ferromagnetic rings (15) are packed into a box-shaped container (16) made of non-ferromagnetic material.

7. The filling device (1) according to any one of the preceding claims, wherein the core (17) of said slider (7) is concentric and coaxial to said valve body (2).

8. The filling device (1) according to any one of the preceding claims, wherein said annular sleeve (13) is coaxial to the valve body (2).

9. The filling device (1) according to any one of the preceding claims, further comprising a stepper motor configured to make said annular sleeve (13) slide on the valve body (2).

10. The filling device (1) according to any one of the preceding claims, wherein said coating (18) is made of PEEK.

11. The filling device (1) according to any one of the preceding claims, wherein said passage (3) has a section narrowing (10) that defines a first chamber (11) receiving the filling fluid from the inlet (4) and a second chamber (12) receiving the filling fluid from the first chamber (11).

12. The filling device (1) according to claim 11, wherein said valve means (6) further comprises a shutter (8) and a flow rate selector (9), said shutter (8) being integrally fixed to a first end (7a) of said slider (7) in proximity to the dispensing nozzle (5) and said flow rate selector (9) being integrally fixed to a second end (7b) of said slider (7) and being configured to assume at least one engagement configuration with said section narrowing (10).

13. The filling device (1) according to claim 12 wherein, when the flow rate selector (9) is in said at least one engagement configuration with the section narrowing (10) it defines with said section narrowing (10) at least one minimum gap (110a; 9d) that places in fluid communication the first chamber (11) and the second chamber (12).

14. The filling device (1) according to claim 13, wherein the section narrowing (10) is defined by a thickening (110) located transversally to the walls of the valve body (2), said minimum gap (110a) being obtained by affording a groove in said thickening (110).

15. The filling device (1) according to claim 13, wherein said minimum gap (9d) is obtained by affording a grooved recess on the outer surface of the flow rate selector (9).

16. The filling device (1) according to any one of claims 13 to 15, wherein, by effect of the sliding of the slider (7) in the valve body (2), the flow rate selector (9) can assume at least three configurations:
- a first engagement configuration wherein the flow rate selector (9) engages the section narrowing (10) defining said minimum gap (110a; 9d);
- a second engagement configuration wherein the flow rate selector (9) engages the section narrowing (10) defining a gap larger than said minimum gap (110a; 9d);
- a third configuration wherein the flow rate selector (9) does not engage the section narrowing (10) and is arranged in said first chamber (11).

17. The filling device (1) according to claim 16, wherein:
- in the first engagement configuration the flow rate selector (9) is arranged between the first chamber (11) and the second chamber (12);
- in the second engagement configuration the flow rate selector (9) is arranged mainly in the first chamber (11);
- in the third configuration the flow rate selector (9) is arranged entirely in the first chamber (11).

18. The filling device (1) according to claim 16 or 17, wherein said flow rate selector (9) can assume infinite positions between the first and the second engagement configuration.

19. The filling device (1) according to claim 16 or 17, wherein said flow rate selector (9) can assume a discrete number of positions between the first and the second engagement configuration.

20. The filling device (1) according to any one of claims 12 to 19, wherein said flow rate selector (9) comprises a body having an elongated shape with a first ogival end (9a) which is tapered in the direction of the first chamber (11) and a second ogival end (9b) which is tapered in the direction of the second chamber (12).

21. The filling device (1) according to claim 20, wherein said flow rate selector (9) has a grooved recess (9c) in the zone of the second ogival end (9b).

22. The filling device (1) according to any one of claims 12 to 21, wherein said shutter (8) has an ogival conformation.

23. A filling machine comprising a plurality of filling devices (1) according to any one of the preceding claims.

## Patentansprüche

1. Füllvorrichtung (1) zum Füllen eines Behälters, umfassend:
einen Ventilkörper (2), der sich hauptsächlich entlang einer Längsrichtung (AA) erstreckt; einen Einlass (4) für ein Füllfluid;
eine Ausgabedüse (5) zum Ausgeben des Füllfluids an den Behälter;
einen Durchlass (3) für das Füllfluid, der innerhalb des Ventilkörpers (2) zwischen dem Einlass (4) und der Ausgabedüse (5) erhalten wird;
Ventilmittel (6), die betriebswirksam auf den Durchlass (3) wirken, um eine selektive Kommunikation zwischen dem Einlass (4) und der Ausgabedüse (5) herzustellen, wobei die Ventilmittel (6) einen Schieber (7) umfassen, der verschiebbar im Ventilkörper (2) eingesetzt ist, wobei der Schieber (7) einen Kern (17) aus ferromagnetischem Material umfasst, auf den eine Beschichtung (18) aufgebracht ist, wobei der Kern (17) des Schiebers (7) einen zentralen Abschnitt (17a) mit einer zylindrischen Ausdehnung entlang der Längsrichtung (AA) und eine Vielzahl von radialen Vorsprüngen (17b) mit einer Ausdehnung orthogonal zur Längsrichtung (AA) aufweist;
eine ringförmige Hülse (13), die verschiebbar außerhalb des Ventilkörpers (2) montiert ist, wobei die ringförmige Hülse (13) eine Vielzahl von magnetischen Ringen (14) umfasst, die sich mit einer Vielzahl von ferromagnetischen Ringen (15) abwechseln, wobei eine Wand (19) des Ventilkörpers (2) zwischen dem ferromagnetischen Ring (15) und den radialen Vorsprüngen (17b) angeordnet ist, **dadurch gekennzeichnet, dass** die Beschichtung aus thermoplastischem Polymer hergestellt ist, und dadurch, dass ein jeder ferromagnetische Ring (15) einer Gruppe von radialen Vorsprüngen (17b) gegenüberliegt, die auf der gleichen Höhe relativ zum Schieber (7) angeordnet sind, wobei ein jeder der radialen Vorsprünge (17b) aus einer Rippe oder einem Zahn besteht, die/der sich radial vom zentralen Abschnitt (17a) erstreckt.

2. Füllvorrichtung (1) nach Anspruch 1, wobei zwischen den radialen Vorsprüngen (17b) Räume oder Lücken (20) vorhanden sind, die durch die Beschichtung (18) gefüllt sind.

3. Füllvorrichtung (1) nach Anspruch 1 oder 2, wobei die radialen Vorsprünge (17b) entlang der Längsausdehnung des zentralen Abschnitts (17a) verteilt sind.

4. Füllvorrichtung (1) nach einem der Ansprüche 1 bis 3, wobei die radialen Vorsprünge (17b) gleichmäßig beabstandet sind.

5. Füllvorrichtung (1) nach Anspruch 1, wobei die Rippen oder Zähne, die sich auf der gleichen Höhe relativ zum Schieber (7) erstrecken, eine kreuzförmige Struktur definieren.

6. Füllvorrichtung (1) nach einem der Ansprüche 1 bis 5, wobei die magnetischen Ringe (14) und die ferromagnetischen Ringe (15) in einem kastenförmigen Behältnis (16) aus nicht ferromagnetischem Material gepackt sind.

7. Füllvorrichtung (1) nach einem der vorhergehenden Ansprüche, wobei der Kern (17) des Schiebers (7) konzentrisch und koaxial zum Ventilkörper (2) ist.

8. Füllvorrichtung (1) nach einem der vorhergehenden Ansprüche, wobei die ringförmige Hülse (13) koaxial zum Ventilkörper (2) ist.

9. Füllvorrichtung (1) nach einem der vorhergehenden Ansprüche, ferner umfassend einen Schrittmotor, der ausgelegt ist, um die ringförmige Hülse (13) auf dem Ventilkörper (2) gleiten zu lassen.

10. Füllvorrichtung (1) nach einem der vorhergehenden Ansprüche, wobei die Beschichtung (18) aus PEEK hergestellt ist.

11. Füllvorrichtung (1) nach einem der vorhergehenden Ansprüche, wobei der Durchlass (3) eine Querschnittsverengung (10) aufweist, die eine erste Kammer (11), die das Füllfluid vom Einlass (4) erhält, und eine zweite Kammer (12), die das Füllfluid von der ersten Kammer (11) erhält, definiert.

12. Füllvorrichtung (1) nach Anspruch 11, wobei die Ventilmittel (6) ferner einen Verschluss (8) und einen Durchflusswähler (9) umfassen, wobei der Verschluss (8) fest an einem ersten Ende (7a) des Schiebers (7) in der Nähe der Ausgabedüse (5) befestigt ist und der Durchflusswähler (9) fest an einem zweiten Ende (7b) des Schiebers (7) befestigt ist und ausgelegt ist, um wenigstens eine Eingriffsauslegung mit der Querschnittsverengung (10) einzunehmen.

13. Füllvorrichtung (1) nach Anspruch 12, wobei, wenn sich der Durchflusswähler (9) in der mindestens einen Eingriffsauslegung mit der Querschnittsverengung (10) befindet, er mit der Querschnittsverengung (10) mindestens einen minimalen Spalt (110a; 9d) definiert, der die erste Kammer (11) und die zweite Kammer (12) in Fluidkommunikation bringt.

14. Füllvorrichtung (1) nach Anspruch 13, wobei die Querschnittsverengung (10) durch eine Verdickung (110) definiert ist, die quer zu den Wänden des Ventilkörpers (2) angeordnet ist, wobei der minimale Spalt (110a) durch Bereitstellung einer Nut in der Verdickung (110) erhalten wird.

15. Füllvorrichtung (1) nach Anspruch 13, wobei der minimale Spalt (9d) durch Bereitstellung einer gerillten Aussparung auf der Außenfläche des Durchflusswählers (9) erhalten wird.

16. Füllvorrichtung (1) nach einem der Ansprüche 13 bis 15, wobei der Durchflusswähler (9) durch die Wirkung des Gleitens des Schiebers (7) im Ventilkörper (2) mindestens drei Auslegungen einnehmen kann:
- eine erste Eingriffsauslegung, in der der Durchflusswähler (9) in die Querschnittsverengung (10) eingreift, die den minimalen Spalt (110a; 9d) definiert;
- eine zweite Eingriffsauslegung, in der der Durchflusswähler (9) in die Querschnittsverengung (10) eingreift, die einen Spalt definiert, der größer als der minimale Spalt (110a; 9d) ist;
- eine dritte Auslegung, in der der Durchflusswähler (9) nicht in die Querschnittsverengung (10) eingreift und in der ersten Kammer (11) angeordnet ist.

17. Füllvorrichtung (1) nach Anspruch 16, wobei:
- in der ersten Eingriffsauslegung ist der Durchflusswähler (9) zwischen der ersten Kammer (11) und der zweiten Kammer (12) angeordnet;
- in der zweiten Eingriffsauslegung ist der Durchflusswähler (9) hauptsächlich in der ersten Kammer (11) angeordnet;
- in der dritten Auslegung ist der Durchflusswähler (9) vollständig in der ersten Kammer (11) angeordnet.

18. Füllvorrichtung (1) nach Anspruch 16 oder 17, wobei der Durchflusswähler (9) unendliche Positionen zwischen der ersten und der zweiten Eingriffsauslegung einnehmen kann.

19. Füllvorrichtung (1) nach Anspruch 16 oder 17, wobei der Durchflusswähler (9) eine diskrete Anzahl von Positionen zwischen der ersten und der zweiten Eingriffsauslegung einnehmen kann.

20. Füllvorrichtung (1) nach einem der Ansprüche 12 bis 19, wobei der Durchflusswähler (9) einen Körper aufweisend eine längliche Form mit einem ersten spitzbogenförmigen Ende (9a), das sich in Richtung der ersten Kammer (11) verjüngt, und einem zweiten spitzbogenförmigen Ende (9b), das sich in Richtung der zweiten Kammer (12) verjüngt, umfasst.

21. Füllvorrichtung (1) nach Anspruch 20, wobei der Durchflusswähler (9) eine gerillte Aussparung (9c) in der Zone des zweiten spitzbogenförmigen Endes (9b) aufweist.

22. Füllvorrichtung (1) nach einem der Ansprüche 12 bis 21, wobei der Verschluss (8) eine spitzbogenförmige Gestalt aufweist.

23. Füllmaschine umfassend eine Vielzahl von Füllvorrichtungen (1) nach einem der vorhergehenden Ansprüche.

## Revendications

1. Dispositif de remplissage (1) pour remplir un récipient, comprenant :
un corps de soupape (2) qui se prolonge principalement le long d'une direction longitudinale (AA) ; une entrée (4) pour un fluide de remplissage ;
une buse de distribution (5) pour distribuer le fluide de remplissage au récipient ;
un passage (3) pour le fluide de remplissage, obtenu à l'intérieur du corps de soupape (2) entre l'entrée (4) et la buse de distribution (5) ;
des moyens de soupape (6) actifs de manière fonctionnelle sur ledit passage (3) pour établir une communication sélective entre l'entrée (4) et la buse de distribution (5), lesdits moyens de soupape (6) comprenant un coulisseau (7) introduit de manière coulissante dans le corps de soupape (2), ledit coulisseau (7) comprenant un noyau (17) constitué d'un matériau ferromagnétique auquel est appliqué un revêtement (18), le noyau (17) dudit coulisseau (7) comportant une partie centrale (17a) ayant une extension cylindrique le long de ladite direction longitudinale (AA) et une pluralité de saillies radiales (17b) ayant une extension orthogonale à la direction longitudinale (AA) ;
un manchon annulaire (13) monté de manière coulissante à l'extérieur du corps de soupape (2), ledit manchon annulaire (13) comprenant une pluralité d'anneaux magnétiques (14) s'alternant avec une pluralité d'anneaux ferromagnétiques (15), dans lequel une paroi (19) du corps de soupape (2) est interposée entre ledit anneau ferromagnétique (15) et les saillies radiales (17b), **caractérisé en ce que** le revêtement est en polymère thermoplastique, et **en ce que** chaque anneau ferromagnétique (15) fait face à un groupe de saillies radiales (17b) situées à la même hauteur par rapport au coulisseau (7), dans lequel chacune desdites saillies radiales (17b) consiste en une ailette ou une dent se prolongeant radialement à partir de ladite partie centrale (17a).

2. Dispositif de remplissage (1) selon la revendication 1, dans lequel entre lesdites saillies radiales (17b) se trouvent des espaces ou des écartements (20) remplis par ledit revêtement (18).

3. Dispositif de remplissage (1) selon les revendications 1 ou 2, dans lequel lesdites saillies radiales (17b) sont réparties le long de l'extension longitudinale de ladite partie centrale (17a).

4. Dispositif de remplissage (1) selon l'une quelconque des revendications 1 à 3, dans lequel lesdites saillies radiales (17b) sont équidistantes.

5. Dispositif de remplissage (1) selon la revendication 1, dans lequel les ailettes ou dents qui se prolongent à la même hauteur par rapport au coulisseau (7) définissent une structure en forme de croix.

6. Dispositif de remplissage (1) selon l'une quelconque des revendications 1 à 5, dans lequel lesdits anneaux magnétiques (14) et lesdits anneaux ferromagnétiques (15) sont emballés dans un récipient en forme de boîte (16) réalisé en matériau non ferromagnétique.

7. Dispositif de remplissage (1) selon l'une quelconque des revendications précédentes, dans lequel le noyau (17) dudit coulisseau (7) est concentrique et coaxial audit corps de soupape (2).

8. Dispositif de remplissage (1) selon l'une quelconque des revendications précédentes, dans lequel ledit manchon annulaire (13) est coaxial au corps de soupape (2).

9. Dispositif de remplissage (1) selon l'une quelconque des revendications précédentes, comprenant de plus un moteur pas à pas configuré pour faire coulisser ledit manchon annulaire (13) sur le corps de soupape (2).

10. Dispositif de remplissage (1) selon l'une quelconque des revendications précédentes, dans lequel ledit revêtement (18) est réalisé en fibre PEEK.

11. Dispositif de remplissage (1) selon l'une quelconque des revendications précédentes, dans lequel ledit passage (3) comporte un rétrécissement de section (10) qui définit une première chambre (11) recevant le fluide de remplissage de l'entrée (4) et une deuxième chambre (12) recevant le fluide de remplissage de la première chambre (11).

12. Dispositif de remplissage (1) selon la revendication 11, dans lequel lesdits moyens de soupape (6) comprennent de plus un obturateur (8) et un sélecteur de débit (9), ledit obturateur (8) étant intégralement fixé à une première extrémité (7a) dudit coulisseau (7) à proximité de la buse de distribution (5) et ledit sélecteur de débit (9) étant intégralement fixé à une seconde extrémité (7b) dudit coulisseau (7) et étant configuré pour adopter au moins une configuration de mise en prise avec ledit rétrécissement de section (10).

13. Dispositif de remplissage (1) selon la revendication 12, dans lequel, lorsque le sélecteur de débit (9) se trouve dans ladite au moins une configuration de mise en prise avec le rétrécissement de section (10), il définit avec ledit rétrécissement de section (10) au moins un écartement minimum (110a ; 9d) qui place en communication fluidique la première chambre (11) et la seconde chambre (12).

14. Dispositif de remplissage (1) selon la revendication 13, dans lequel le rétrécissement de section (10) est défini par un épaississement (110) situé transversalement aux parois du corps de soupape (2), ledit écartement minimum (110a) étant obtenu en réalisant une rainure dans ledit épaississement (110).

15. Dispositif de remplissage (1) selon la revendication 13, dans lequel ledit écartement minimum (9d) est obtenu en réalisant un renfoncement rainuré sur la surface extérieure du sélecteur de débit (9).

16. Dispositif de remplissage (1) selon l'une quelconque des revendications 13 à 15, dans lequel, par effet du coulissement du coulisseau (7) dans le corps de soupape (2), le sélecteur de débit (9) peut adopter au moins trois configurations :
- une première configuration de mise en prise dans laquelle le sélecteur de débit (9) se met en prise avec le rétrécissement de section (10) définissant ledit écartement minimum (110a ; 9d) ;
- une deuxième configuration de mise en prise dans laquelle le sélecteur de débit (9) se met en prise avec le rétrécissement de section (10) définissant un écartement plus grand que ledit écartement minimum (110a ; 9d) ;
- une troisième configuration dans laquelle le sélecteur de débit (9) ne se met pas en prise avec le rétrécissement de section (10) et est disposé dans ladite première chambre (11).

17. Dispositif de remplissage (1) selon la revendication 16, dans lequel :
- dans la première configuration de mise en prise, le sélecteur de débit (9) est disposé entre la première chambre (11) et la seconde chambre (12) ;
- dans la deuxième configuration de mise en prise, le sélecteur de débit (9) est disposé principalement dans la première chambre (11) ;
- dans la troisième configuration, le sélecteur de débit (9) est disposé entièrement dans la première chambre (11).

18. Dispositif de remplissage (1) selon les revendications 16 ou 17, dans lequel ledit sélecteur de débit (9) peut adopter des positions infinies entre la première et la deuxième configuration de mise en prise.

19. Dispositif de remplissage (1) selon les revendications 16 ou 17, dans lequel ledit sélecteur de débit (9) peut adopter un nombre distinct de positions entre la première et la deuxième configuration de mise en prise.

20. Dispositif de remplissage (1) selon l'une quelconque des revendications 12 à 19, dans lequel ledit sélecteur de débit (9) comprend un corps ayant une forme allongée avec une première extrémité ogivale (9a) qui est conique dans la direction de la première chambre (11) et une seconde extrémité ogivale (9b) qui est conique dans la direction de la seconde chambre (12).

21. Dispositif de remplissage (1) selon la revendication 20, dans lequel ledit sélecteur de débit (9) comporte un renfoncement rainuré (9c) dans la zone de la seconde extrémité ogivale (9b).

22. Dispositif de remplissage (1) selon l'une quelconque des revendications 12 à 21, dans lequel ledit obturateur (8) présente une conformation ogivale.

23. Machine de remplissage comprenant une pluralité de dispositifs de remplissage (1) selon l'une quelconque des revendications précédentes.
